# EUROPEAN PATENT SPECIFICATION

(11) **EP 2 191 734 B1**
(45) Date of publication and mention of the grant of the patent: **15.02.2012**
(21) Application number: 08830442.3
(22) Date of filing: 11.09.2008
(51) Int. Cl.: A23L 2/60

(54) **ASPARTAME-CONTAINING ACIDIC BEVERAGES**
SAURE ASPARTAMHALTIGE GETRÄNKE
BOISSONS ACIDES CONTENANT DE L'ASPARTAME

(30) Priority: 11.09.2007 JP 2007235961
(43) Date of publication of application: 02.06.2010
(73) Proprietor: Suntory Holdings Limited, Kita-ku, Osaka-shi Osaka 530-8203 (JP)
(72) Inventor: NONAKA, Yuji, Kawasaki-shi Kanagawa 211-0067 (JP); TAKEMOTO, Susumu, Kawasaki-shi Kanagawa 211-0067 (JP)
(74) Representative: Vossius & Partner
(86) International application number: PCT/JP2008/066447
(87) International publication number: WO 2009/035048

(56) References cited:
- EP-A1- 0 102 032
- EP-A2- 0 416 718
- WO-A1-2005/077384
- WO-A1-2007/078293
- JP-A- 03 183 453
- JP-A- 10 229 847
- US-A- 5 731 025

## Description

### TECHNICAL FIELD

The present invention relates to aspartame-containing acidic beverages. More specifically, the present invention relates to acidic beverages designed to prevent a storage-induced reduction in the sweetness of aspartame, which comprise a polymerized polyphenol (particularly a polymerized catechin), as well as a method for preventing a storage-induced reduction in the sweetness of aspartame in aspartame-containing acidic beverages by using a polymerized polyphenol (particularly a polymerized catechin).

### BACKGROUND ART

High-intensity sweeteners whose sweetness is stronger than that of sugar are used in a wide range of products such as diet foods and so on (including beverages). Particularly in the field of beverages that are consumed in high quantities, high-intensity sweeteners are used in low-calorie beverages (e.g., reduced calorie or non-calorie beverages) and in various beverages based on the sugar-free concept.

Among high-intensity sweeteners, aspartame is excellent in safety and quality of sweetness, and its use is effective in enhancing flavor and in reducing the bitterness and/or acridness of co-existing substances. For these reasons, aspartame is used widely and extensively. However, aspartame has a problem in that it is hydrolyzed under acidic conditions to cause a reduction in its sweetness, and no solution has been found for this problem.

Patent Document 1 describes that aspartame is combined with other sweeteners at levels below the threshold of sweetness to thereby compensate for a hydrolysis-induced reduction in the sweetness of aspartame, and further to provide a masking effect on the astringent taste of aspartame.
Patent Document 1: Japanese Patent Public Disclosure No. H10-262600

### DISCLOSURE OF THE INVENTION

### PROBLEMS TO BE SOLVED BY THE INVENTION

The present invention aims to provide a method for preventing a reduction in the sweetness of aspartame caused by its hydrolysis under acidic conditions, and to provide acidic beverages designed to prevent a storage-induced reduction in the sweetness of aspartame.

### MEANS FOR SOLVING THE PROBLEMS

As a result of extensive and intensive efforts made to solve the problems stated above, the inventors of the present invention have found that upon addition to aspartame-containing acidic beverages, a polymerized polyphenol (particularly a polymerized catechin, which is a tea-derived polymerized polyphenol) can prevent a storage-induced reduction in the sweetness of aspartame. This finding led to the completion of the present invention.

Namely, the present invention relates to aspartame-containing acidic beverages, which comprise a polymerized polyphenol at a concentration sufficient to prevent a storage-induced reduction in the sweetness of aspartame. More particularly, the present invention relates to acidic beverages containing 0.04% by weight or more of aspartame, which comprise a polymerized polyphenol at a concentration sufficient to prevent a storage-induced reduction in the sweetness of aspartame.

One embodiment of the present invention is directed to aspartame-containing acidic beverages, which comprise a polymerized polyphenol at a concentration sufficient to prevent a storage-induced reduction in the sweetness of aspartame, wherein the polymerized polyphenol is a polymerized catechin.

The present invention also relates to aspartame-containing packaged or low-calorie acidic beverages, which comprise a polymerized polyphenol at a concentration sufficient to prevent a storage-induced reduction in the sweetness of aspartame.

The present invention further relates to a method for preventing a storage-induced reduction in the sweetness of aspartame in aspartame-containing acidic beverages, which comprises using a polymerized polyphenol.

One embodiment of the present invention is directed to a method for preventing a storage-induced reduction in the sweetness of aspartame in aspartame-containing acidic beverages, which comprises using a polymerized polyphenol, wherein the polymerized polyphenol is a polymerized catechin.

### ADVANTAGES OF THE INVENTION

Upon addition to aspartame-containing acidic beverages, a polymerized polyphenol (particularly a polymerized catechin, which is a tea-derived polymerized polyphenol) can prevent a storage-induced reduction in the sweetness of aspartame.

### BRIEF DESCRIPTION OF THE DRAWLING

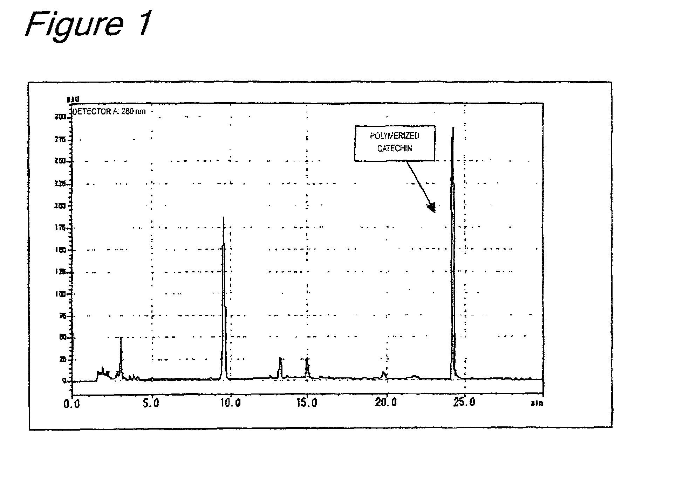

Figure 1 shows the results analyzed by HPLC.

### BEST MODE FOR CARRYING OUT THE INVENTION

### (Aspartame)

Aspartame has a compound name of "α-L-aspartyl-L-phenylalanine methyl ester" and is represented by the following formula (I).

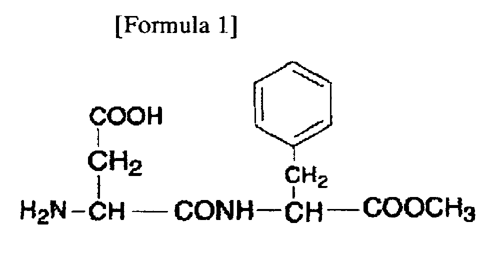

Aspartame has a taste quality similar to that of fructose or the like, and has a 200-fold higher sweetness than sugar although it is slightly less mellow than sugar. As in the case of sugar, aspartame has a calorie value of about 4 kcal/g, but is not responsible for dental caries because no acid is generated in the presence of dental plaque in the mouth. Moreover, aspartame is low in bitter and astringent tastes and is approved as a safe food additive in the US, Japan and many other countries. This aspartame is marketed under the trade name "Pal Sweet" by Ajinomoto Co., Inc., Japan.

The amount of aspartame incorporated into the beverages of the present invention is not limited in any way. However, at an aspartame content of 0.04% by weight (aspartame-based sweetness level: 8) or more, a significant effect can be confirmed in preventing a storage-induced reduction in the sweetness of beverages stored for long period of time, i.e., packaged beverages distributed in the form filled into containers.

### (Polymerized polyphenol)

Polyphenol is a kind of plant-derived substance (phytochemical) and is a generic name for compounds having two or more phenolic hydroxyl groups per molecule. Polyphenols are divided into two major classes: unpolymerized polyphenols having a molecular weight of 1,000 or less; and polymerized polyphenols in which two or more unpolymerized polyphenol molecules are attached one after another. Namely, polymerized polyphenols used in the present invention are each composed of two or more unpolymerized polyphenol molecules. Polymerized polyphenol is also generally referred to as tannin. Typical examples of unpolymerized polyphenols include flavonoids (which include compounds whose skeletal structure is flavone, flavonol, flavanone, flavanolol, isoflavone, anthocyanin, flavanol, chalcone, or aurone), chlorogenic acid, gallic acid, ellagic acid, etc. On the other hand, polymerized polyphenols are compounds in which two or more unpolymerized polyphenol molecules are attached one after another, and are divided into two major subclasses: condensed polyphenols polymerized via carbon-carbon bonds; and hydrolyzable polyphenols polymerized via ester linkages. Typical examples include proanthocyanidins for condensed polyphenols, and gallotannin and ellagitannin for hydrolyzable polyphenols.

Any polymerized polyphenol may be used in the present invention as long as it is a polymerized polyphenol as defined above. Examples include various commercially available polymerized polyphenols, e.g., pine bark polymerized polyphenol (flavangenol^{®}; Toyo Shinyaku Co., Ltd., Japan), grape seed polyphenol (Kikkoman Corporation, Japan) and cacao polyphenol (Meiji Seika Kaisha Ltd., Japan), as well as tea-derived polymerized polyphenols (herein also referred to as "polymerized catechins") such as oolong tea polymerized polyphenol as disclosed in WO2005/07738 and black tea polymerized polyphenol obtainable by being prepared in the same manner.

Among the above polymerized polyphenols, tea-derived polymerized polyphenols (also referred to as "polymerized catechins") are particularly preferred for use. The use of polymerized catechins not only provides significant aftertaste-improving effects (e.g., prevention of residual sweetness and reduction of offensive and/or bitter taste peculiar to high-intensity sweeteners), but also imparts full body (rich flavor) to low-calorie (including non-calorie) beverages, thus allowing an improvement in the taste of beverages. High-intensity sweeteners are used as diet sweeteners and also used for many other purposes (e.g., limitation of calorie intake in obesity cases, suppression of increased blood glucose levels in diabetes or other diseases), and hence they have features as "low-calorie sweeteners." However, these high-intensity sweeteners may have a problem in that they lack rich flavor (also referred to as full body or deep taste) in some cases. The present invention is also useful in overcoming the lack of rich flavor in low-calorie (including non-calorie) beverages comprising such high-intensity sweeteners.

Polymerized catechin is a component identified by HPLC analysis under the conditions shown below, i.e., a component at a peak having the same elution time (reference elution time: 24 minutes) as theaflavin (a product of Kurita Research Center) (see Figure 1).
- Column:: TSK-gel ODS-80TsQA (4.6 mmφ x 150 mm, Tosoh Corporation, Japan)
- Mobile phase:: A:water:acetonitrile:trifluoroacetic acid = 900:100:0.5
B: water:acetonitrile:trifluoroacetic acid = 200:800:0.5
- Flow rate:: 1.0 ml/min
- Column temperature:: 40°C
- Gradient conditions:: 0% B until 5 minutes after initiation of the analysis,
8% B between 5 minutes and 11 minutes,
10% B between 11 minutes and 21 minutes,
100% B between 21 minutes and 22 minutes,
maintained at 100% between 22 minutes and 30 minutes,
0% between 30 minutes and 31 minutes
- Detection:: A280 nm (time point for data collection: 30 minutes), quantified by peak area
- Injection volume:: 10 µL
- Standard substance:: oolong homobisflavan B (abbreviated as: OHBF-B)
The amount of polymerized catechin can be determined from a calibration curve prepared by using OHBF-B as a standard substance. OHBF-B used as a standard substance may be synthesized according to the method described in Chem. Pharm. Bull 37(12), 3255-3563 (1989) or the method described in Example 3 of Japanese Patent Public Disclosure No. 2005-336117 (preferably purified to 98% or more purity), or alternatively, may be isolated from tea leaves, by way of example.

Examples of such polymerized catechin include those having a structure in which several molecules of unpolymerized catechin (i.e., (+)-catechin, (-)-epicatechin, (+)-gallocatechin, (-)-epigallocatechin, (-)-catechin gallate, (-)-epicatechin gallate, (-)-gallocatechin gallate, (-)-epigallocatechin gallate) are linked by the action of tea-derived enzymes, enzymes, light, etc. Specific examples include polymerized polyphenols commonly referred to as thearubigin and so on, i.e., an epigallocatechin gallate dimer of formula (1):

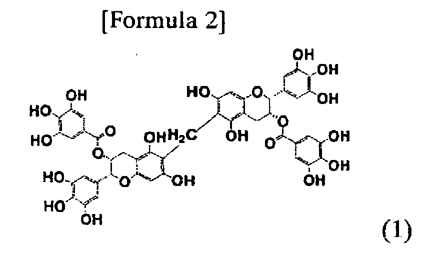

an epigallocatechin gallate trimer of formula (2):

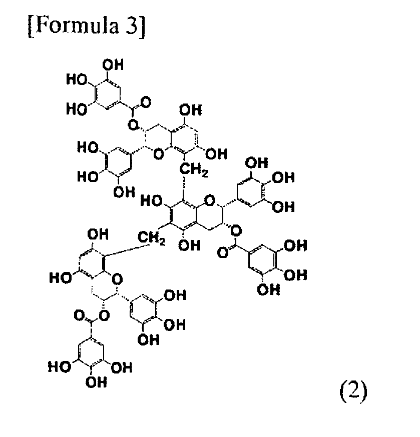

an epigallocatechin dimer of formula (3):

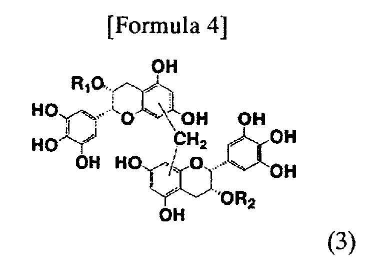

(wherein R₁ and R₂ each independently represent H or a galloyl group), an epigallocatechin trimer of formula (4):

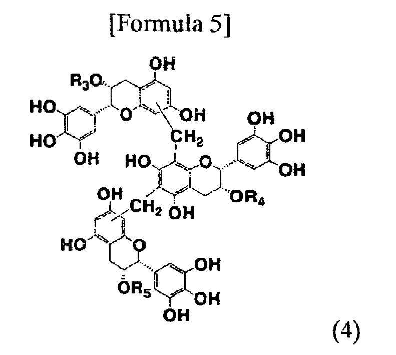

(wherein R₃, R₄ and R₅ each independently represent H or a galloyl group), and oolong theanine-3'-O-gallate of formula (5):

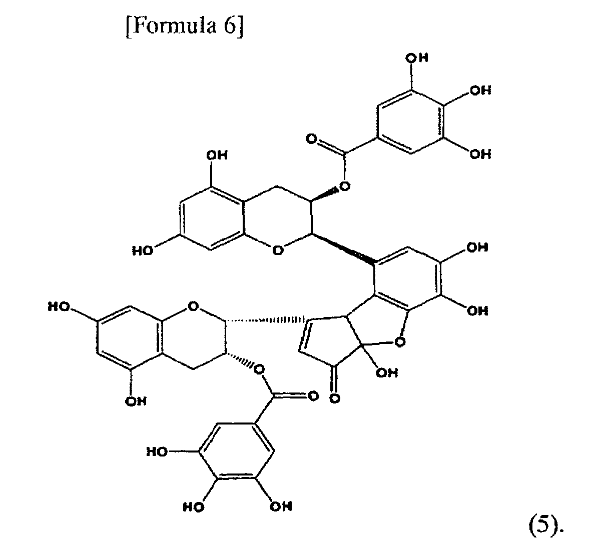

It should be noted that unpolymerized catechin refers to an unpolymerized monomer of catechin (i.e., (+)-catechin, (-)-epicatechin, (+)-gallocatechin, (-)-epigaliocatechin, (-)-catechin gallate, (-)-epicatechin gallate, (-)-gallocatechin gallate, (-)-epigallocatechin gallate).

The polymerized catechins of the present invention can be obtained from tea leaves by solvent extraction. Tea leaves used as a source material may be of one or more types selected from green tea (non-fermented tea), oolong tea (semi-fermented tea) and black tea (fermented tea). Among them, tea leaves of semi-fermented tea or fermented tea rich in polymerized catechins are preferred for use. As an extraction solvent, water or boiling water, methanol, ethanol, isopropanol, ethyl acetate and so on are used alone or in admixture thereof. Such a solvent extract of tea leaves may be used directly or may be concentrated or purified before use.

Since the use of polymerized polyphenols (particularly polymerized catechins) provides a significant effect in preventing a storage-induced reduction in the sweetness of aspartame, preferred for use is a solvent extract of tea leaves which is enriched for polymerized catechins by selectively removing monomeric catechins. In general, monomeric catechins and caffeine have bitter and astringent tastes, and hence are more likely to impair the taste of foods or beverages per se when incorporated at higher contents. Thus, it is preferable to use a solvent extract treated to selectively remove monomeric catechins and/or caffeine from the above tea leaf extract. Examples of such a solvent extract treated to selectively remove monomeric catechins and/or caffeine include those containing polymerized catechins at a concentration 4-fold or higher than that of unpolymerized catechins, as found in WO2005/077384.

Polymerized polyphenols used in the present invention may be either in liquid form or powdered by spray drying or freeze pulverization.

Polymerized polyphenols are preferably added at a weight ratio of 0.1 to 1.0, more preferably at a weight ratio of 0.1 to 0.5, relative to the weight of aspartame added.

### (Acidic beverage)

The acidic beverages of the present invention are intended to mean beverages having a pH of 2 to 5 (preferably a pH of 2.5 to 4.5), but are not limited thereto as long as aspartame in the beverages will be hydrolyzed during storage. The acidic beverages may be of any type, including carbonated beverages, fruit juice-containing beverages, vegetable beverages, nutritional beverages, etc.

The present invention is intended to prevent a storage-induced reduction in the sweetness of aspartame by addition of polymerized polyphenols (particularly polymerized catechins). The content of polymerized polyphenols in the beverages of the present invention may be selected as appropriate, depending on the amount of aspartame to be incorporated into the beverages, the type of polymerized polyphenols to be used, etc. It is 0.010% to 0.100% by weight (calculated as polymerized polyphenol) relative to the total beverage weight. If the polymerized polyphenol concentration is less than 0.010% by weight, a sufficient effect cannot be obtained in preventing a storage-induced reduction in the sweetness of aspartame. On the other hand, at a concentration exceeding 0.100% by weight, no further effect can be expected and hence there is no economic advantage. Moreover, some types of polymerized polyphenols would reduce the maximum sweetness level of the sweetener, e.g., due to the astringent taste originating from the polymerized polyphenols.

Furthermore, the beverages of the present invention comprising polymerized polyphenols (particularly polymerized catechins) not only prevent a reduction in sweetness, but also compensate for the lack of rich flavor in aspartame-containing low-calorie beverages. Thus, the beverages of the present invention are preferred for use as low-calorie beverages. Examples of beverages whose calorie level should be lowered include carbonated beverages (e.g., cola drinks, soda drinks), sports drinks, fruit drinks, milk-based beverages, tea-based beverages, etc. In particular, the present invention can be targeted at carbonated beverages, which cause a problem of obesity when drunk in large quantities.

These acidic beverages of the present invention may optionally be supplemented with fruit juices, sweeteners, acidulants, flavorings, other additives, etc.

The acidic beverages of the present invention can prevent changes in flavor during storage, as described above, and hence are preferred for use as beverages distributed in the form filled into containers, i.e., packaged beverages. In the case of packaged beverages, a heat disinfection (or sterilization) step is required, and it is expected that hydrolysis of aspartame will be facilitated during this step. The acidic beverages of the present invention are also effective in preventing a heat-induced reduction in the sweetness of aspartame during such a heat sterilization step. It should be noted that containers used for these packaged beverages are in any form that can be provided as beverages, including paper cartons, plastic bottles, cans, bottles, etc.

### EXAMPLES

The present invention will be further described in more detail by way of the following examples, which are not intended to limit the present invention.

### Preparation Example 1: Preparation of oolong tea polymerized polyphenol (polymerized catechin)

Using a sodium bicarbonate solution (7800 kg) containing 0.15% by weight of sodium bicarbonate in hot water (95°C), 600 kg of oolong tea leaves were extracted to give an oolong tea extract in a yield of about 7000 kg. While the solution temperature was maintained at 60-65°C, this extract was passed through 400 kg of granular activated charcoal (GW-H32/60, Kuraray Co., Ltd., Japan) to remove unpolymerized catechin and caffeine. This solution (activated charcoal-treated solution) was concentrated under reduced pressure to give a polymerized catechin-containing concentrated oolong tea extract having a Brix value of 11 (hereinafter referred to as extract A) in a yield of about 900 kg. The concentrations of polymerized catechin, unpolymerized catechin, and caffeine in the extract A thus obtained were measured by HPLC under the conditions shown below. As a result, polymerized catechin was 12000 ppm, unpolymerized catechin was 800 ppm, and caffeine was 20 ppm, on a weight basis.
HPLC conditions:
- Column:: TSK-gel ODS-80TsQA (4.6 mmφ x 150 mm, Tosoh Corporation, Japan)
- Mobile phase:: A: water: acetonitrile:trifluoroacetic acid = 900:100:0.5
B:-water:acetonitrile:trifluoroacetic acid = 200:800:0.5
- Flow rate:: 1.0 ml/min
- Column temperature:: 40°C
- Gradient conditions:: 0% B until 5 minutes after initiation of the analysis,
8% B between 5 minutes and 11 minutes,
10% B between 11 minutes and 21 minutes,
100% B between 21 minutes and 22 minutes,
maintained at 100% between 22 minutes and 30 minutes,
0% between 30 minutes and 31 minutes
- Detection:: A280 nm
- Standard substance:: oolong homobisflavan B (OHBF-B)
- Retention time of polymerized catechin:: A peak at about 25 minutes matches with the peak of theaflavin.

### Preparation Example 2: Preparation of black tea polymerized polyphenol (polymerized catechin)

To 100 g of black tea leaves, 2000 g of boiling water (90°C or higher) was added and maintained for 1 hour (90°C or higher) to give a black tea extract. This extract was cooled and then centrifuged (6000 rpm, 5 minutes) to remove insoluble materials, followed by the same activated charcoal treatment as used in Preparation Example 1 to give a polymerized catechin-containing black tea extract having a Brix value of 2. The resulting extract was further concentrated under reduced pressure to prepare a polymerized catechin-containing concentrated black tea extract (extract B). The same HPLC analysis as used in Preparation Example 1 was repeated, indicating that polymerized catechin was 2000 ppm, unpolymerized catechin was 200 ppm, and caffeine was 5 ppm, on a weight basis.

### Example 1

Pal Sweet Diet^{®} (Ajinomoto Co., Inc., Japan) was used as aspartame, while the extract A obtained in Preparation Example 1 (oolong tea polymerized polyphenol), the extract B obtained in Preparation Example 2 (black tea polymerized polyphenol), grape seed polymerized polyphenol (Kikkoman Corporation, Japan) or pine bark polymerized polyphenol (Toyo Shinyaku Co., Ltd., Japan) was used as a polymerized polyphenol.

To a 0.1% aqueous aspartame solution, the extract A was added at 100, 200, 300 or 500 ppm (calculated as polymerized catechin) on a weight basis, the extract B was added at 300 ppm (calculated as polymerized catechin) on a weight basis, the grape seed polymerized polyphenol was added at 300 ppm on a weight basis, or the pine bark polymerized polyphenol was added at 300 ppm on a weight basis. The samples thus prepared were each adjusted to pH 3.5 with phosphoric acid. After heat sterilization (95°C, 30 seconds), these samples were filled into plastic bottles in 350 mL volumes and stored at 4°C or 45°C. After one month, a sensory test was made by 4 panelists to evaluate the sweetness of these samples. In this experiment, storage at 45°C for one month corresponds to storage for 10 months. In the sensory test, the intensity of sweetness was evaluated on a five-point scale to calculate a mean value for each sample (Table 1), assuming that the 0.1% aqueous aspartame solution (pH 3.5) (free from polymerized polyphenol) had a sweetness score of 5, while the 0.1% aqueous aspartame solution (pH 3.5) (free from polymerized polyphenol) stored at 45°C for one month (control) had a sweetness score of 1. The results indicated that upon addition of polymerized polyphenol, particularly oolong tea polymerized polyphenol or black tea polymerized polyphenol, the sweetness of aspartame was prevented from disappearing. It should be noted that all of the polymerized polyphenol-containing aqueous aspartame solutions stored at 4°C had a sweetness score of 5, regardless of the type of polymerized polyphenol.

**[Table 1]**

| Sweetness levels (sensory scores) after storage at 45°C for one month | | | | | | | | |
|---|---|---|---|---|---|---|---|---|
| | Control | OTPP | | | | Black tea polymerized polyphenol | Grape seed polymerized polyphenol | Pine bark polymerized polyphenol |
| Concentration (ppm) | 0 | 100 | 200 | 300 | 500 | 300 | 300 | 300 |
| Sensory score (1-5) | 1.00 | 2.50 | 3.00 | 2.63 | 2.50 | 2.13 | 1.50 | 1.25 |

### Example 2

Carbonated beverages were prepared according to the recipe shown in Table 2. After heat sterilization (95°C, 30 seconds), the beverages were saturated with carbonic acid, filled into plastic bottles in 350 mL volumes and stored at 45°C for one month. After storage, a sensory test was made by 5 panelists. In the sensory test, relative evaluation was performed on a five-point scale to calculate a mean value for each sample, assuming that the sweetness score before storage was 5. As a result, test sample 1 (free from oolong tea polymerized polyphenol) had a score of 2.8, whereas test sample 2 (containing oolong tea polymerized polyphenol) had a score of 4.1, indicating that upon addition of oolong tea polymerized polyphenol, the sweetness was prevented from disappearing.

**[Table 2]**

| | Test sample 1 | Test sample 2 | |
|---|---|---|---|
| Sodium benzoate | 0.2 | 0.2 | g |
| Sodium citrate | 0.5 | 0.5 | g |
| Citric acid (anhydride) | 0.55 | 0.55 | g |
| Aspartame | 0.4 | 0.4 | g |
| Acesulfame potassium | 0.1 | 0.1 | g |
| Flavoring | 4 | 4 | g |
| Oolong tea polymerized polyphenol | 0 | 260 | ppm |
| Phosphoric acid | q.s. | q.s. | |
| Carbonic acid | q.s. | q.s. | |
| Total weight | 1000 | 1000 | g |

| | | | |
|---|---|---|---|
| *Phosphoric acid was added to give a final pH of 3.5. *Carbonic acid was added at a gas pressure of 3.7 kgf/cm². | | | |

## Claims

1. An aspartame-containing acidic beverage, which comprises a polymerized polyphenol at a concentration of 0.010% by weight to 0.100% by weight.

2. An aspartame-containing acidic beverage, which comprises a polymerized polyphenol at a weight ratio of 0.1 to 1.0 relative to the weight of aspartame.

3. The beverage according to claim 1 or 2, wherein the concentration of aspartame is 0.04% by weight or more.

4. The beverage according to any one of claims 1 to 3, wherein the acidic beverage has a pH of 2 to 5.

5. The beverage according to any one of claims 1 to 4, wherein the polymerized polyphenol is a polymerized catechin.

6. The beverage according to claim 5, which further comprises an unpolymerized catechin, wherein the polymerized catechin is contained at a higher concentration than the unpolymerized catechin.

7. The beverage according to claim 6, wherein the polymerized catechin is contained at a concentration 4-fold or higher than that of the unpolymerized catechin.

8. The beverage according to any one of claims 4 to 7, wherein the polymerized catechin is derived from a semi-fermented tea or a fermented tea.

9. The beverage according to any one of claims 1 to 8, which is in the form of a packaged beverage.

10. The beverage according to any one of claims 1 to 9, which is a low-calorie beverage.

11. A method for preventing a storage-induced reduction in the sweetness of aspartame in aspartame-containing acidic beverages, which comprises using a polymerized polyphenol at a concentration of 0.010% by weight to 0.100% by weight.

12. A method for preventing a storage-induced reduction in the sweetness of aspartame in aspartame-containing acidic beverages, which comprises using a polymerized polyphenol at a weight ratio of 0.1 to 1.0 relative to the weight of aspartame.

13. The method according to claim 11 or 12, wherein the polymerized polyphenol is a polymerized catechin.

14. The method according to claim 13, wherein a mixture of polymerized and unpolymerized catechins is used, which contains the polymerized catechin at a higher concentration than the unpolymerized catechin.

15. The method according to claim 14, wherein the mixture contains the polymerized catechin at a concentration 4-fold or higher than that of the unpolymerized catechin.

16. The method according to any one of claims 13 to 15, wherein the polymerized catechin is derived from a semi-fermented tea or a fermented tea.

## Patentansprüche

1. Ein saures Aspartam-haltiges Getränk, welches ein polymerisiertes Polyphenol in einer Konzentration von 0,010 Gew.-% bis 0,100 Gew.-% umfasst.

2. Ein saures Aspartam-haltiges Getränk, welches ein polymerisiertes Polyphenol in einem Gewichtsverhältnis von 0,1 bis 1,0 in Bezug auf das Gewicht von Aspartam umfasst.

3. Das Getränk gemäß Anspruch 1 oder 2, wobei die Konzentration an Aspartam 0,04 Gew.-% oder mehr beträgt.

4. Das Getränk gemäß einem der Ansprüche 1 bis 3, wobei das saure Getränk einen pH von 2 bis 5 aufweist.

5. Das Getränk gemäß einem der Ansprüche 1 bis 4, wobei das polymerisierte Polyphenol ein polymerisiertes Catechin ist.

6. Das Getränk gemäß Anspruch 5, welches ferner ein unpolymerisiertes Catechin umfasst, wobei das polymerisierte Catechin in einer höheren Konzentration als das unpolymerisierte Catechin enthalten ist.

7. Das Getränk gemäß Anspruch 6, wobei das polymerisierte Catechin in einer 4-fachen oder höheren Konzentration als die des unpolymerisierten Catechins enthalten ist.

8. Das Getränk gemäß einem der Ansprüche 4 bis 7, wobei das polymerisierte Catechin aus einem halb-fermentierten Tee oder einem fermentierten Tee stammt.

9. Das Getränk gemäß einem der Ansprüche 1 bis 8, welches in Form eines verpackten Getränks vorliegt.

10. Das Getränk gemäß einem der Ansprüche 1 bis 9, wobei es sich um ein kalorienarmes Getränk handelt.

11. Ein Verfahren zur Vermeidung einer durch Lagerung induzierten Reduzierung der Süße von Aspartam in sauren Aspartam-haltigen Getränken, welches das Verwenden eines polymerisierten Polyphenols in einer Konzentration von 0,010 Gew.-% bis 0,100 Gew.-% umfasst.

12. Ein Verfahren zur Vermeidung einer durch Lagerung induzierten Reduzierung der Süße von Aspartam in sauren Aspartam-haltigen Getränken, welches das Verwenden eines polymerisierten Polyphenols in einem Gewichtsverhältnis von 0,1 bis 1,0 in Bezug auf das Gewicht von Aspartam umfasst.

13. Das Verfahren gemäß Anspruch 11 oder 12, wobei das polymerisierte Polyphenol ein polymerisiertes Catechin ist.

14. Das Verfahren gemäß Anspruch 13, wobei ein Gemisch an polymerisierten und unpolymerisierten Catechinen verwendet wird, welches das polymerisierte Catechin in einer höheren Konzentration als das unpolymerisierte Catechin enthält.

15. Das Verfahren gemäß Anspruch 14, wobei das Gemisch das polymerisierte Catechin in einer 4-fachen oder höheren Konzentration als die des unpolymerisierten Catechins enthält.

16. Das Verfahren gemäß einem der Ansprüche 13 bis 15, wobei das polymerisierte Catechin aus einem halb-fermentierten Tee oder einem fermentierten Tee stammt.

## Revendications

1. Boisson acide contenant de l'aspartame, qui comprend un polyphénol polymérisé à une concentration de 0,010 % en poids à 0,100 % en poids.

2. Boisson acide contenant de l'aspartame, qui comprend un polyphénol polymérisé à un rapport en poids de 0,1 à 1,0 par rapport au poids de l'aspartame.

3. Boisson selon la revendication 1 ou 2, dans laquelle la concentration d'aspartame est de 0,04 % en poids ou plus.

4. Boisson selon l'une quelconque des revendications 1 à 3, dans laquelle la boisson acide présente un pH de 2 à 5.

5. Boisson selon l'une quelconque des revendications 1 à 4, dans laquelle le polyphénol polymérisé est une catéchine polymérisée.

6. Boisson selon la revendication 5, qui comprend en outre une catéchine non polymérisée, où la catéchine polymérisée est contenue à une concentration plus élevée que la catéchine non polymérisée.

7. Boisson selon la revendication 6, dans laquelle la catéchine polymérisée est contenue à une concentration quatre fois plus élevée ou plus que celle de la catéchine non polymérisée.

8. Boisson selon l'une quelconque des revendications 4 à 7, dans laquelle la catéchine polymérisée est dérivée d'un thé semi-fermenté ou d'un thé fermenté.

9. Boisson selon l'une quelconque des revendications 1 à 8, qui est sous la forme d'une boisson conditionnée.

10. Boisson selon l'une quelconque des revendications 1 à 9, qui est une boisson hypocalorique.

11. Procédé pour empêcher une réduction induite par le stockage du pouvoir édulcorant de l'aspartame dans des boissons acides contenant de l'aspartame, qui consiste à utiliser un polyphénol polymérisé à une concentration de 0,010 % en poids à 0,100 % en poids.

12. Procédé pour empêcher une réduction induite par le stockage du pouvoir édulcorant de l'aspartame dans des boissons acides contenant de l'aspartame, qui consiste à utiliser un polyphénol polymérisé à un rapport en poids de 0,1 à 1,0 par rapport au poids de l'aspartame.

13. Procédé selon la revendication 11 ou 12, dans lequel le polyphénol polymérisé est une catéchine polymérisée.

14. Procédé selon la revendication 13, dans lequel un mélange de catéchine polymérisée et non polymérisée est utilisé, qui contient la catéchine polymérisée à une concentration plus élevée que celle de la catéchine non polymérisée.

15. Procédé selon la revendication 14, dans lequel le mélange contient la catéchine polymérisée à une concentration 4 fois plus élevée ou plus que celle de la catéchine non polymérisée.

16. Procédé selon l'une quelconque des revendications 13 à 15, dans lequel la catéchine polymérisée est dérivée d'un thé semi-fermenté ou d'un thé fermenté.
